# EUROPEAN PATENT APPLICATION

(11) **EP 4 704 237 A1**
(43) Date of publication of application: **04.03.2026**
(21) Application number: 24796662.5
(22) Date of filing: 25.03.2024
(51) Int. Cl.: H01M 50/317, H01M 50/204, H01M 50/333

(54) **POWER SUPPLY EQUIPMENT**

(30) Priority: 28.04.2023 JP 2023075247
(71) Applicant: Panasonic Intellectual Property Management Co., Ltd., Kadoma-shi, Osaka 571-0057 (JP)
(72) Inventor: LU, Jia, 571-0057 Osaka (JP); SAKAMOTO, Tomonori, 571-0057 Osaka (JP)
(74) Representative: Eisenführ Speiser
(86) International application number: PCT/JP2024/011687
(87) International publication number: WO 2024/224904

(57) **Abstract**

A power supply device in accordance with an aspect of the present disclosure includes: secondary battery cells, each of the secondary battery cells including a discharge valve configured to open when an internal pressure exceeds a predetermined pressure; and an outer case accommodating the secondary battery cells therein. The outer case includes a check valve configured to open when an internal pressure of the outer case increases and to close when the internal pressure of the outer case decreases. The check valve includes: a discharge window opening in a part of the outer case; and a closing mechanism which is openable and closable and is configured to close the discharge window.

## Description

### TECHNICAL FIELD

The present disclosure relates to a power supply device including secondary battery cells accommodated in an outer case, and relates to a power supply device including the secondary battery cells accommodated in the outer case in which each cell includes a discharge valve configured to open when an internal pressure becomes higher than a predetermined pressure.

### BACKGROUND ART

A power supply device including a battery block including of battery cells accommodated in an outer case is used for a power supply of a power storage system for factories, home use, or the like or a vehicle power supply for hybrid cars, electric vehicles, or the like. In such a power supply device including battery cells mounted in an outer case as a battery block, in order to secure safety, a discharge valve is provided in each battery cell. When an abnormality occurs, i.e., when an internal pressure becomes higher than a predetermined pressure, the discharge valve of the battery cell opens to prevent the battery case from bursting. Since the discharge valve opens while the battery cell is in abnormal use conditions, ejected objects, such as discharge gas, become high-temperature and high-pressure, causing various kinds of thermal damage. If the ejected objects which are discharged from the battery cell are emitted to the outside of the outer case while keeping the temperature high, a flame may be ejected. Therefore, to secure safety, it is necessary to prevent an outer flame, i.e., to prevent the ejected objects, which are discharged from the battery cell, from being changed to a flame and emitted to the outside of the case.

To prevent such a situation, a pack battery has vent holes provided in an outer case, thereby cooling and discharging gas, which is generated at the time of explosion, effectively, and sparks, serving as an ignition source, are suppressed to prevent an outer flame (see PTL 1).

### CITATION LIST

### Patent Literature

PTL 1: International Publication WO2020/153017

### SUMMARY OF INVENTION

In the above-mentioned pack battery, perforated plates each made of a plastic plate having a large number of through-holes are provided in an opening of a case. The perforated plates are laminated in the state where an expansion gap is interposed therebetween. The through-holes of each of the laminated perforated plates do not face each other at non-facing positions. Thus, high-temperature and high-energy discharge gas which is ejected from a discharge valve of the battery cell pass through the through-holes of the perforated plate and are diffused into the expansion gap, expanding adiabatically. Since the discharge gas passes through the through-holes and is discharged to the outside of the case, the discharge gas is not exhausted to the outside of the case vigorously, thereby suppressing disadvantages such as emitting smoke and ignition, so that the safety is improved.

A small pack battery is mainly used for this system although the size of a power supply device may be changed from a small one to a large one. In recent years, a high-power/high-capacity power supply device has been required. To satisfy such requirement, a large-capacity battery cell is required to be used. In addition to this, a large number of battery cells are required for a power supply device. However, even when using a battery cell whose energy is large, if the power supply device including a large number of battery cells takes the same structure, exhaust capability of through-holes of the perforated plate hardly follows a pressure rise within the outer case due to a large amount of gas discharged from the battery cells. This may cause deformation of the outer case, head crack of a screw, burst, or the like.

Especially, the ejected objects discharged from the battery cell may include not only gas but also foreign matters such as small metal pieces. If a large amount of foreign matters mentioned above are discharged and concentrate on through-holes of the perforated plate, the through-holes are likely to be clogged with the foreign matters not having passed the through-holes. This situation reduces the amount of the gas from the through-holes of the perforated plate and increases an inner pressure of the outer case accordingly, possibly causing adverse influences. Therefore, the outer case is required to has a structure to surely discharge, to the outside thereof, not only the gas exhausted from the battery cell but also the foreign matters included in the gas.

In such a situation, an exhaust amount of gas from the through-holes of the perforated plate decreases, thereby increasing the internal pressure more and more. This facilitates harmful effects due to the increase in internal pressure of the outer case. Accordingly, as structure of the outer case, it is required that not only gas discharged from the battery cell but also foreign matters which are mixed in the gas are discharged to the outside securely without clogging the through-holes. To satisfy such a situation, the following manner may be considered, i.e., a big hole is opened in the outer case, and this hole is simply closed with a closing member. If an unsafe event occurs in battery cells, the closing member is broken to open the hole, thereby discharging the foreign matters, which are emitted from the battery cells, to the outside. Thus, a burst or the like which is caused by the increase in internal pressure of the outer case may be avoided. However, in this manner, a big hole needs to be opened. This configuration allows oxygen to enter the outer case through the big hole, and to cause firing in the outer case. The requirement that ejected objects, such as high-temperature and high-pressure gas and foreign matters, are discharged efficiently from the inside to the outside of the outer case, and the requirement that oxygen is prevented from entering from the outside of the outer case are contrary to each other. Therefore, both these requirements are hardly met simultaneously and hardly improve safety, as a problem.

A power supply device in accordance with an aspect of the present disclosure includes a plurality of secondary battery cells and an outer case that houses the secondary battery cells. Each of the cells includes a discharge valve configured to open when an internal pressure of each cell exceeds a predetermined pressure. The outer case includes a check valve configured to open when an internal pressure of the outer case increases and to close when the internal pressure of the outer case decreases. The check valve includes a discharge window opening in a part of the outer case and a closing mechanism which is openable and closable and is configured to close the discharge window.

In the power supply device of the present disclosure, when an unsafe event occurs in the secondary battery cells accommodated in the outer case, a large amount of gas and foreign matters are discharged and increase the internal pressure of the outer case. In such a situation, the power supply device emits the gas inside and the foreign matters to the outside smoothly, or in the state where the internal pressure of the outer case decreases, prevents the air from entering from the outside. Thus, firing may be securely prevented inside the outer case advantageously.

### BRIEF DESCRIPTION OF DRAWINGS

FIG. 1 is a perspective view of a power supply device in accordance with Exemplary Embodiment 1 of the present disclosure.
FIG. 2 is a vertical cross-sectional view of the power supply device at line II-II shown in FIG. 1.
FIG. 3 is a vertical cross-sectional view of the power supply device at line III-III shown in FIG. 1.
FIG. 4 is a horizontal cross-sectional view of the power supply device at line IV-IV shown in FIG. 1.
FIG. 5 is an exploded perspective view of the power supply device shown in FIG. 1.
FIG. 6 is an exploded perspective view of the power supply device shown in FIG. 5 viewed from below.
FIG. 7 is an exploded perspective view of an inner case shown in FIG. 5.
FIG. 8 is an exploded perspective view of the inner case shown in FIG. 7 viewed from below.
FIG. 9 is an exploded perspective view of a check valve of the power supply device shown in FIG. 1.
FIG. 10 is an enlarged cross-sectional view of the check valve of the power supply device shown in FIG. 1 for illustrating an operation thereof.
FIG. 11 is a front view of another example of the check valve.
FIG. 12 is a front view of still another example of the check valve.
FIG. 13 is a cross-sectional view of the check valve for illustrating manufacturing processes thereof.
FIG. 14 is an enlarged cross-sectional view of a check valve of a power supply device in accordance with another exemplary embodiment for illustrating an operation thereof.
FIG. 15 is an enlarged cross-sectional view of a check valve of a power supply device in accordance with still another exemplary embodiment for illustrating an operation thereof.
FIG. 16 is an enlarged cross-sectional view of a check valve of a power supply device in accordance with still another exemplary embodiment for illustrating an operation thereof.

### DESCRIPTION OF EMBODIMENT

A power supply device in accordance with an aspect of the present disclosure includes a plurality of secondary battery cells and an outer case accommodating the plurality of secondary battery cells therein. Each of the plurality of secondary battery cells includes a discharge valve configured to open when an internal pressure exceeds a predetermined pressure. The outer case includes a check valve configured to open when an internal pressure of the outer case increases and to close when the internal pressure of the outer case decreases. The check valve includes a discharge window opening in a part of the outer case and a closing mechanism which is openable and closable and is configured to close the discharge window.

According to the above-mentioned configuration, when an unsafe event occurs in the secondary battery cell in the outer case, the discharge valve of a secondary battery cell opens. In such a situation, when the internal pressure in the outer case increases, the check valve opens to discharge gas and foreign matters in the outer case to the outside. In addition to this, when the internal pressure stops rising, the check valve is closed to prevent external air from entering the outer case, thereby preventing firing effectively, thus enhancing the safety. Especially, in the power supply device of the present disclosure, the check valve of the outer case includes a discharge window opening in a part of the outer case and the opening mechanism configured to close the discharge window openably and closably. This configuration allows ejected objects such as gas and foreign matters which are discharged from the secondary battery cell to be discharged securely to the outside from the discharge window opening in the outer case with the check valve with a simple structure.

In the above-mentioned power supply device, a check valve is provided in the outer case. However, a general check valve which is used for general purposes is not used as the check valve. This is because the general check valve includes: an inflow pipe in which a fluid, such as gas, flows; a valve body that opens and closes depending on pressure of the fluid flowing into from the inflow pipe; and a discharge pipe that discharges, to the outside, the fluid which passes through the opened valve body. If such a check valve is used for the power supply device of the present disclosure, it will be considered that high-temperature and high-pressure gas which is discharged from the secondary battery cell may damage the inflow pipe and the valve body harmfully. Alternatively, the inflow pipe and the valve body may be clogged with inflow foreign matters, thereby preventing the valve from opening and closing appropriately and impair the function. On the other hand, in the present disclosure, the check valve of the outer case includes a discharge window opening in a part of the outer case and a closing mechanism which is openable and closeable and is configured to close the discharge window. Therefore, a complex structure, such as the inflow pipe part or the discharge pipe, is not necessary unlike the conventional check valve. This configuration allows not only gas but also foreign matters or the like to be discharged efficiently through the discharge window opening in the outer case while simplifying the structure thereof. Especially, in the state where the discharge window opening in the outer case is opened, the check valve emits high-temperature and high-pressure gas and foreign matters to the outside smoothly. In addition to this, while the internal pressure decreases after the discharging, this check valve closes the discharge window with the closing mechanism, thereby securely preventing the air from entering from the outside.

In the power supply device in accordance with another aspect of the present disclosure, the closing mechanism may include a plate spring. The plate spring may include a fixing part fixed to the outer case and a closing part extending from the fixing part, the closing part being configured to elastically close the discharge window.

According to the above-mentioned configuration, the plate spring used as the closing mechanism allows the check valve to open and close the discharge window securely while having a most simple structure, i.e., constituted by the discharge window opening in the outer case and the plate spring configured to close the discharge window. Especially, the closing mechanism, which is the plate spring, includes a fixing part fixed to the outer case and a closing part extending from the fixing part and configured to elastically close the discharge window. Therefore, through a simple operation of fixing the fixing part to the outer case, the closing part may be arranged at a fixed position to close the discharge window securely.

In the power supply device in accordance with still another aspect of the present disclosure, the plate spring is held such that the closing part is urged so as to elastically close the discharge window while the fixing part is fixed to the outer case.

According to the above configuration, while the fixing part of the plate spring is fixed to the outer case, the closing part is held to be urged where the discharge window is closed elastically. Therefore, when the check valve is closed, the discharge window remains closed by the closing part securely.

In the power supply device in accordance with still another aspect of the present disclosure, the discharge window may have a circular shape, and the closing part may have a rectangular shape.

According to the above-mentioned configuration, the discharge window which opens in a circular shape is covered with the rectangular closing part and closed. This configuration allows the circular discharge window with the rectangular closing part to be closed securely while stabilizing a force caused by gas pressure and acting on the closing part.

In the power supply device in accordance with still another aspect of the present disclosure, a plurality of discharge windows including the discharge windows may open in a part of a surface of the outer case. The plate spring may include a plurality of closing parts including the closing part, the plurality of closing parts extending from the fixing part and being moveable independently from one another with respect to the fixing part. Each of the plurality of closing parts may be configured to close a corresponding one of the plurality of discharge windows.

According to the above-mentioned configuration, when an unsafe event occurs in the secondary battery cell in the outer case, the discharge valves of the secondary battery cells open. In such a situation, since the check valves open in response to an increase of internal pressure in the outer case, the check valves open depending on discharge gas discharged from the secondary battery cells. Thus, the discharge gas which is to be discharged to the outside of the outer case is controlled and discharged safely. Further, the plate spring includes closing parts divided with respect to the fixing part. Therefore, when the fixing part is fixed to the outer case, each of the closing parts may be arranged at a corresponding one of the discharge windows and close it.

The power supply device in accordance with still another aspect of the present disclosure may include a valve body which is openable and closeable and which is configured to close the discharge window, and an elastic body configured to elastically urge the valve body toward the discharge window.

According to the above-mentioned configuration, the closing mechanism includes the valve body which is openable and closeable and is configured to close the discharge window, and the elastic body configured to elastically urge the valve body toward the discharge window. Therefore, depending on the size or position of the discharge window, the valve body may deform to have an optimal shape or form. In addition to this, depending on the pressure of the check valve, the elastic modulus of the elastic body may be adjusted to open and close the discharge window in the most suitable condition.

In the power supply device in accordance with still another aspect of present disclosure, the outer case may include an exhaust port provided at a part of an outer surface of the outer case being configured to pass gas through. The exhaust port may include an opening port opening in the outer case and a perforated plate disposed in the opening port.

The above-mentioned configuration provides the exhaust port through which high-temperature and high-pressure gas, which is emitted from the secondary battery cells, passes. This exhaust port is constituted by an opening port opening in the outer case and a perforated plate disposed in the opening. The emitted gas discharge to the outside of the outer case through the perforated plate reduces the temperature of the gas efficiently.

Exemplary embodiments of the present disclosure will be described below with reference to drawings. The exemplary embodiments described below are illustrative examples of embodying technical ideas of the present invention, and the present invention is not limited to below. Further, the present description does not intend to specify members shown in the claim to the members described in the exemplary embodiments. Especially, unless otherwise noted, dimensions, materials, and shapes of the components described in the exemplary embodiments, a relative arrangement therebetween, and the like intend not to limit the scope of the present invention, but merely illustrate the scope. Note that, sizes of members shown in the drawing, a positional relationship therebetween, or the like may be exaggerated to clarify the description. Furthermore, in the following description, names or reference signs indicate like or equivalent members, and detailed description thereof will be omitted. Furthermore, each element constituting the present invention may be configured such that a plurality of elements are constituted by the same members to serve the plurality of elements as one member, or a function of one member is shared by the plurality of elements vice versa.

The power supply device of the present disclosure is suitably used for storage application of a floor-mounted type as a power supply of a power storage system for factories, home use, or the like, or a back-up power supply for a server. Alternatively, the power supply device is suitably used for a vehicle power supply for hybrid cars, electric vehicles, or the like. Hereinafter, the power supply device used as a power supply of the power storage systems will be described as one exemplary embodiment of the present disclosure.

### Exemplary Embodiment 1

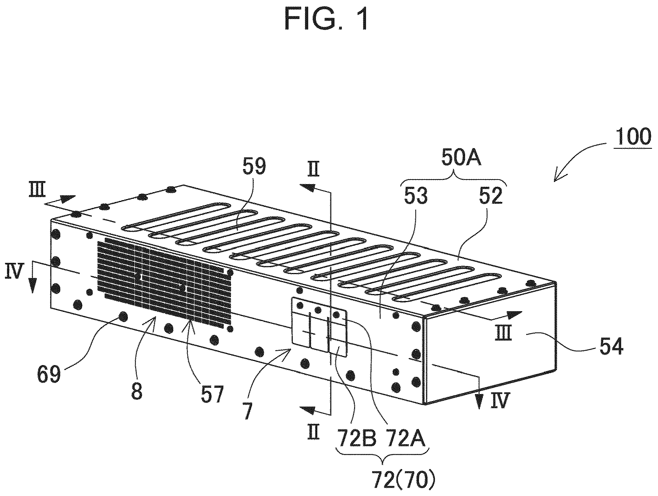

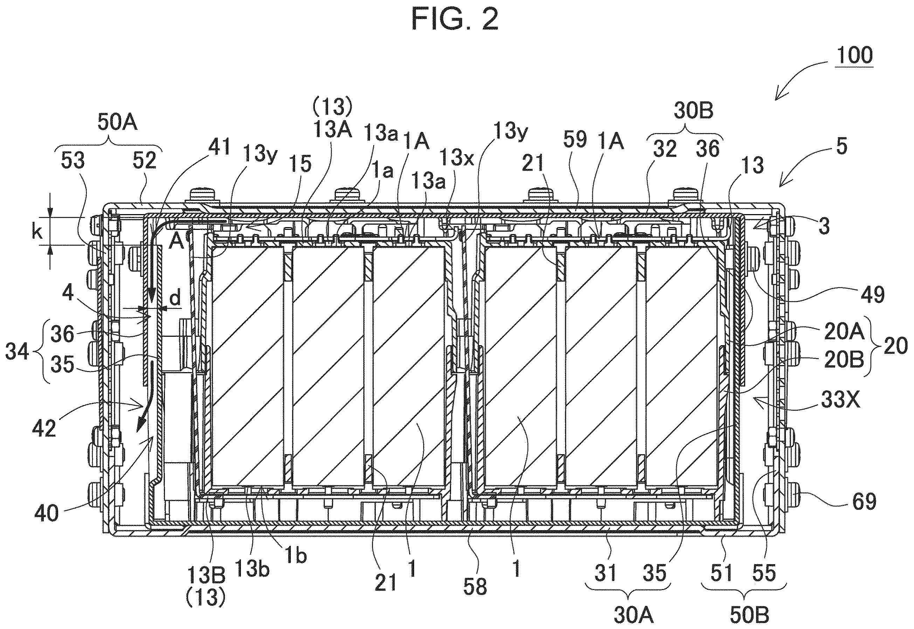

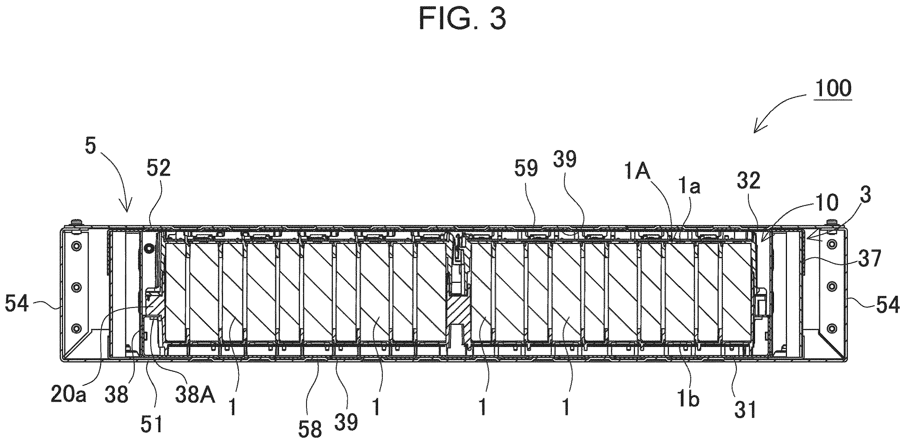

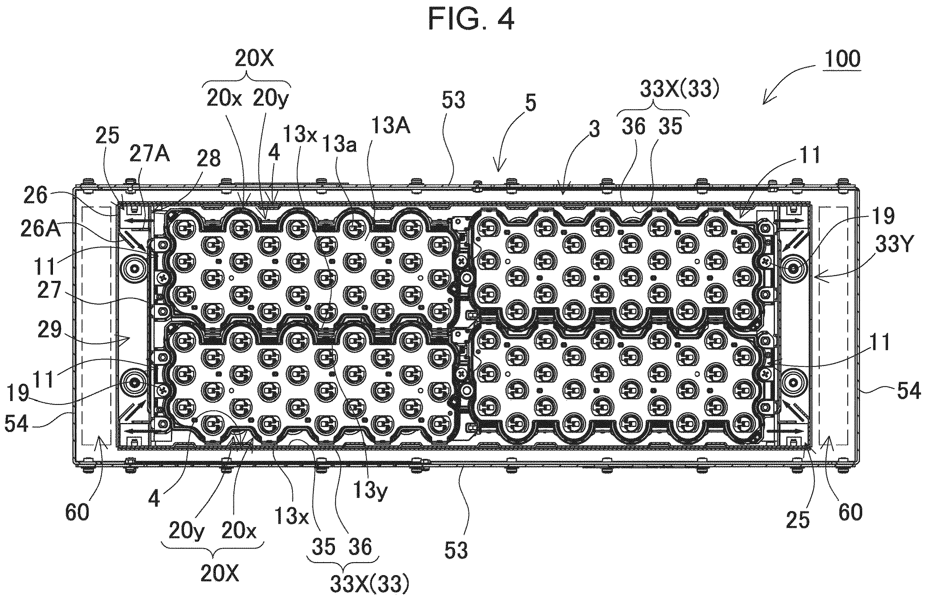

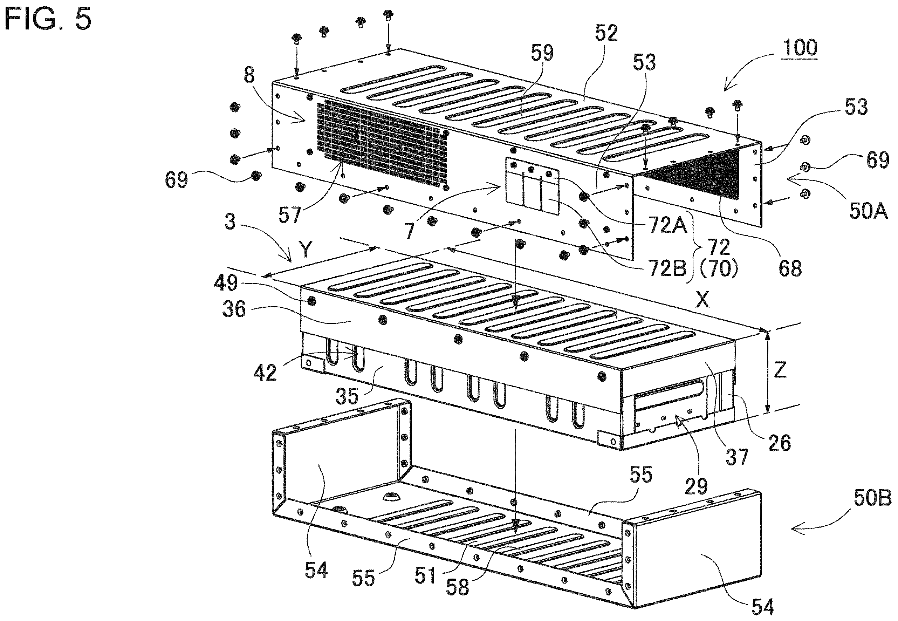

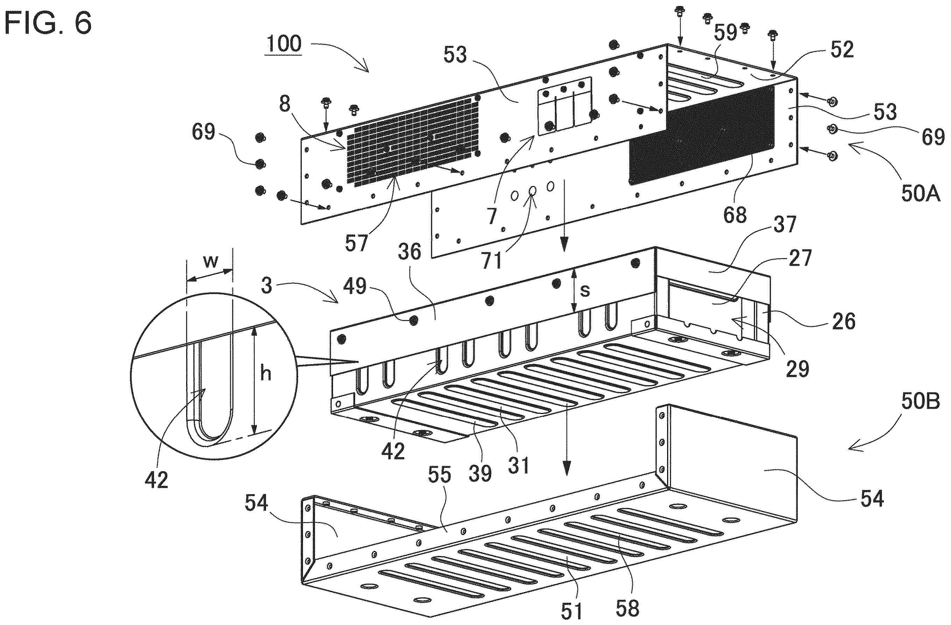

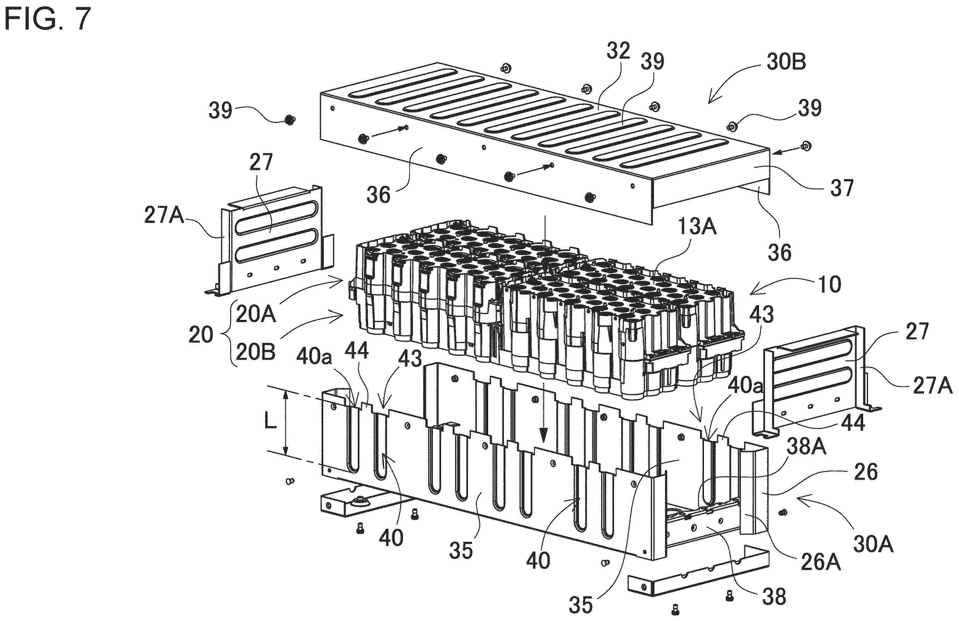

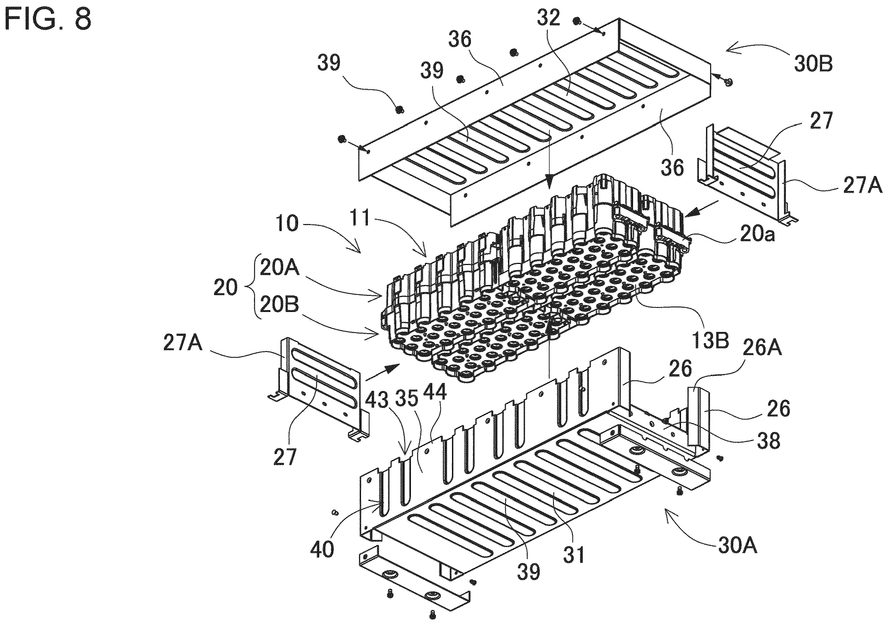

A power supply device in accordance with Exemplary Embodiment 1 of the present disclosure is shown in FIGS. 1-8. FIG. 1 is a perspective view of the power supply device in accordance with Embodiment 1. FIG. 2 is a cross-sectional view of the power supply device at line II-II shown in FIG. 1. FIG. 3 is a cross-sectional view of the power supply device at line III-III shown in FIG. 1. FIG. 4 is a horizontal cross-sectional view of the power supply device at line IV-IV shown in FIG. 1. FIG. 5 is an exploded perspective view of the power supply device shown in FIG. 1. FIG. 6 is an exploded perspective view of the power supply device shown in FIG. 5viewed from below. FIG. 7 is an exploded perspective view of an inner case. FIG. 8 is an exploded perspective view of the inner case shown in FIG. 7 viewed from below.

Power supply device 100 shown in these figures includes secondary battery cells 1 and outer case 5 accommodating the secondary battery cells 1 therein. Each battery cell 1 includes a discharge valve configured to open when an internal pressure of the cell exceeds a predetermined pressure Outer case 5 includes check valve 7 configured to open when an internal pressure in outer case 5 is high and to close when the internal pressure decreases. Check valve 7 includes discharge window 71 opening in a part of outer case 5 and closing mechanism 70 which is openable and closeable and is configured to close discharge window 71.

Power supply device 100 of the present disclosure has a feature below: when an unsafe event occurs in secondary battery cells 1 accommodated in outer case 5, ejected objects, such as gas and foreign matters, discharged from the secondary battery cell 1 increase an internal pressure in the outer case. In this situation, a check valve of the outer case opens to discharge gas and foreign matters which are in the outer case to the outside of the outer case. When the internal pressure of the outer case decreases, the check valve is closed to prevent the external air from entering. Accordingly, the present disclosure employs various kinds of forms, as a form of accommodating the secondary battery cells in the outer case. Hereinafter, as the form of accommodating the secondary battery cells in the outer case, the present disclosure will detail the structure of the outer case while showing an example accommodating secondary battery cells in the outer case while being accommodated in an inner case.

### Secondary Battery Cell 1

Power supply device 100 shown in FIGS. 2, 4, 7, and 8 includes inner case 3 accommodating secondary battery cells 1 therein. Outer case 5 covers inner case 3 accommodating secondary battery cells 1 therein. Each second battery cell 1 is a cylindrical secondary battery including an outer can with a cylindrical shape. An electrode body of cylindrical secondary battery cell 1 is accommodated in an outer can. The outer can have a bottom and has a cylindrical shape which is made of metal. The outer can is filled with electrolyte. After that, an opening of the outer can is crimped and hermetically sealed with a sealing body. The sealing body is hermetically fixed to the outer can via an insulating material. A discharge valve provided in this sealing body is configured to open and discharge ejected objects, such as gas, when an internal pressure becomes higher than a predetermined pressure. Positive and negative electrodes are provided at both ends of cylindrical secondary battery cell 1 in a longitudinal direction of the cylindrical shape. An end surface of secondary battery cell 1 closed by the sealing body is referred to as first end surface 1A. Further, a center electrode provided in a central part of a sealing plate is referred to as one electrode, and an end-face electrode serving as a bottom surface of the outer can is referred to as another electrode.

As secondary battery cell 1, a nonaqueous electrolyte secondary battery having high energy efficiency, e.g., a lithium-ion secondary battery can be used suitably. However, the power supply device of the present disclosure does not specify the secondary battery cell to a lithium-ion secondary battery. All rechargeable batteries, e.g., a nickel hydride battery, a nickel-cadmium battery, or the like can also be used as the secondary battery cell.

### Battery Holder 20

Secondary battery cells 1 are arranged at fixed positions in a predetermined posture through battery holder 20. Secondary battery cells 1 are arranged in parallel with one another in a vertical posture such that first end surface 1A in which the discharge valve is provided is directed upward. Battery holder 2 includes holding parts 21. Each of holding parts 21 accommodates secondary battery cells 1 therein, and covers and holds the ends of secondary battery cells 1. Each secondary battery cell 1 is held at a fixed position through holding part 21. Battery holder 20 shown in FIGS. 2, 7, and 8 is divided into first holder 20A and second holder 20B in the middle in a longitudinal direction of secondary battery cell 1. Secondary battery cell 1 is sandwiched from both sides and held at a fixed position. Battery holder 20 shown in FIG. 2 holds secondary battery cells 1 such that secondary battery cells 1 are arranged in parallel with one another and first end surfaces 1A thereof are aligned on the same plane.

In battery holder 20 shown in FIGS. 7 and 8, holding parts 21 accommodate and arrange secondary battery cells 1 in a bale stacking manner in plan view. In such configuration of arranging secondary battery cells 1 in a bale stacking manner, secondary battery cell 1 in the adjacent line may be arranged to be located at a valley between secondary battery cells 1 arranged in a straight line, thereby achieving space-saving. For this reason, battery holder 20 mentioned above can accommodate a large number of secondary battery cells 1 efficiently, providing a high-capacity device.

Especially, in battery holder 20 shown in FIG. 4, secondary battery cells 1 which are disposed in a lateral direction of inner case 3 elongated in the longitudinal direction are arranged in a straight line to form a battery array. In the battery arrays disposed along the longitudinal direction of inner case 3, secondary battery cells 1 of the battery arrays adjacent to each other are arranged in a bale stacking manner. In battery holder 20 with this shape, both side surfaces 20X include projections 20x and depressions 20y that are alternately arranged. Both side surfaces 20X are disposed along an internal side surface of side wall 33X. Side wall 33X is elongated in the longitudinal direction of inner case 3. To achieve a bale-stacking arrangement of secondary battery cells 1, power supply device 100 arranges the battery arrays alternately. Accordingly, projections 20x and depressions 20y are arranged to be located on side surface 20X of battery holder 20 while extending vertically. In battery holder 20 mentioned above, exhaust duct 4 of inner case 3, described later, is disposed in depression 20y formed in side surface 20X. Battery holder 20 accommodates secondary battery cells 1 in multiple stages and rows. Battery holder 20 is molded with resin into a form in which holding parts 21 are connected in multiple stages and rows. Materials excellent in insulation and heat resistance are preferably used to mold battery holder 20, i.e., resins, such as polycarbonate and ABS may be used.

### Battery Assembly 10

Battery holder 20 allows secondary battery cells 1 to be arranged at fixed positions to constitute battery block 11, and battery blocks 11 are connected to one another to constitute battery assembly 10. Finally, secondary battery cells 1 are accommodated in inner case 3 as battery assembly 10. Battery assembly 10 shown in FIG. 4 includes with four battery blocks 11 arranged on front, rear, right and left sides. Each battery block 11 includes thirty secondary battery cells 1. Therefore, battery assembly 10 has one hundred and twenty secondary battery cells 1 in total. In battery block 11 shown in FIG. 4, thirty secondary battery cells 1 are arranged such that three secondary battery cells 1 are arranged in a front-back direction to form one row, and ten rows are arranged in a left-right direction. The ten rows of battery arrays each constituted by three secondary battery cells 1 are arranged alternately in the left-right direction to form a bale stacking arrangement.

### Lead Plate 13

As shown in FIGS. 4, 7, and 8, secondary battery cells 1 accommodated in battery holder 20 are connected to one another with lead plate 13 in upper and lower opposing surfaces of battery holder 20. In battery block 11 shown in the figure, thirty secondary battery cells 1 are connected in parallel to one another with two lead plates 13 disposed above and below. Lead plate 13 includes first lead plate 13A that connects center electrodes 1a of all secondary battery cells 1 to one another, which constitute battery block 11, on the upper surface side of battery holder 20, and second lead plate 13B that connects end-face electrodes 1b of all the second battery cells 1 to one another, which constitute battery block 11, on the lower surface side of battery holder 20.

As shown in FIGS. 2 and 4, an exposing window is formed in a planar main body of first lead plate 13A to expose center electrode 1a, and first connection tab 13a is provided in the exposing window. First lead plate 13A is connected to center electrode 1a of secondary battery cell 1, which is opposite to first connection tab 13a, so that all secondary battery cells 1 are connected in parallel to one another. First lead plate 13A includes connection parts 13x projecting from one side edge of the main body. Each connection part 13x is exposed from projection 20x of side surface 20X in which projections and depressions of battery holder 20 are provided. In first lead plate 13A, battery blocks 11 adjacent to each other are connected in series to each other with connection part 13x, mentioned above, or connected to an output line.

As shown in FIG. 2, an exposing window is formed in a planar main body of second lead plate 13B to expose end-surface electrode 1b. Second connection tab 13b is provided in the exposing window. Second lead plate 13B is connected to end-surface electrode 1b of secondary battery cell 1, which is opposite to second connection tab 13b, so that all secondary battery cells 1 are connected in parallel to one another. Second lead plate 13B includes projecting connection parts 13y projecting from one edge side of the main body and extending from a lower surface side to an upper surface side of battery holder 20. Each projecting connection part 13y is disposed in depression 20y of side surface 20X in which projections and depressions of battery holder 20 are provided. In second lead plate 13B, battery blocks 11 adjacent to each other are connected in series to each other with projecting connection part 13y, mentioned above, or connected to an output line.

As mentioned above, in four battery blocks 11, all secondary battery cells 1 are connected in parallel to one another. Battery blocks 11 adjacent to each other in a front-rear direction are connected in series to each other with connection part 13x and connection part 13y which are opposite to each other. Additionally, in battery blocks 11 adjacent to each other in left-right direction, connection part 13x exposed toward one side wall of inner case 3 and projecting connection part 13y are connected in series to each other with a connection bus bar. Furthermore, connection part 13x exposed toward the other side wall of inner case 3 and projecting connection part 13y are connected to an output line. Thus, one hundred and twenty secondary battery cells 1 of battery assembly 10 are connected in thirty parallels and four series in total. Lead plate 13 and the connection bus bar are constituted by a metal plate excellent in conductivity, such as nickel and aluminum. However, the present disclosure does not intend to limit the connection manner between the secondary battery cells, more than necessary. In the battery assembly, the number of the secondary battery cells or an arrangement of the secondary battery cells, which constitute each battery block, may be modified variously and additionally, an arrangement of the battery blocks may be modified variously.

### Inner Case 3

Inner case 3 shown in FIGS. 5-8 is made of metal. Lower plate 31 and upper plate 32 are connected to each other with outer peripheral wall 33 to have a box shape. Battery assembly 10 including secondary battery cells 1 is accommodated in inner case 3. Inner case 3 is made of metal plates including first plate 35 and second plate 36 that constitute side walls 33X of outer peripheral wall 33 which face each other. First plate 35 and second plate 36 extend in an elongated direction of inner case 3. First plate 35 and second plate 36 are partially laminated in a vertical middle area of side wall 33X to form laminated portion 34.

Inner case 3 shown in FIGS. 7 and 8 includes first plate 35 and second plate 36. Grooves 40 are provided in first plate 35 which serves as one of the plates forming laminated portion 34 to form an uneven shape. Grooves 40 are provided in a surface of first plate 35 facing second plate 36 and extend in a height direction of side wall 33X. Second plate 36, serving as the other of the plates forming laminated portion 34, has a planar shape. In first plate 35, one end of groove 40 is cut in a direction intersecting with an elongated direction of groove 40, i.e., a horizontal direction in the figure to form opening 40a. Opening 40a is referred to as first opening 41. As shown in FIGS. 7 and 8, a top part of first plate 35 is partially cut by cut-off portions 43, and the remaining portion (not cut-off portion) is used to determine the height of side wall 33X as non-cut-off portion 44. A rear end of groove 40 extends to a bottom part of first plate 35, and the rear end of groove 40 has an arcuate shape.

In the state where second plate 36 is laminated on first plate 35, side wall 33X, mentioned above, partially closes the front end part of groove 40 , which is provided in first plate 35, with second plate 36, but not completely closes the front end part, so that the rear end part is partially opened. In laminated portion 34 mentioned above, partially closing groove 40, which is provided in first plate 35, with second plate 36 constitutes cylindrical exhaust duct 4. In addition, first opening 41, which is opened by cut-off portion 43, is formed at the front end of groove 40, and second opening 42 is located on a rear end side of groove 40 such that an area of groove 40 that is not closed with second plate 36 is partially opened. In side wall 33X, first plate 35, which has groove 40 therein, and second plate 36 are laminated to form exhaust duct 4 in laminated portion 34. In exhaust duct 4 mentioned above, the inside and outside of the inner case 3 are communicated to each other through first opening 41 and second opening 42.

In inner case 3 shown in FIGS. 2, 7, and 8, first plate 35 is disposed inside side wall 33X, and second plate 36 is disposed outside side wall 33X. Further, inner case 3 shown in FIGS. 2, 7, and 8 includes lower case 30A and upper case 30B. In lower case 30A, first plates 35 are connected to both sides of lower plate 31 in a vertical posture. In upper case 30B, second plates 36 are connected to both sides of upper plate 32 in a vertical posture. In inner case 3 with this structure, groove 40 extending vertically is formed in an outer side surface of first plate 35 of first case 30A. First opening 41 is formed to cut off an upper end of groove 40, mentioned above. Further, in inner case 3 with this structure, second plate 36 of second case 30B laminated on the outside of first plate 35 of first case 30A allows one end of groove 40 to be partially closed to form exhaust duct 4 in laminated portion 34. First opening 41 is formed in the one end of groove 40. Another end of groove 40 partially opens to form second opening 42. Exhaust duct 4 mentioned above is communicated to the inside of inner case 3 through first opening 41, and is communicated to the outside of inner case 3 through second opening 42.

In second case 30B including second plate 36 laminated outside first plate 35 of first case 30A, upper plate 32 contacts an upper end of non-cut-off portion 44 which is provided in the upper end of first plate 35 to specify a connection position of second case 30B. Thus, the closed position of groove 40 is specified by second plate 36. In inner case 3 mentioned above, gap (k) between upper plate 32 and an opening position of first opening 41 is formed inside inner case 3, and is determined by a depth of cut-off portion 43 formed in first plate 35.

In inner case 3 shown in FIGS. 5-8, exhaust ducts 4 are provided in opposing side walls 33X. For instance, exhaust ducts 4 may have the same shape and the same size as vertical width (L) and lateral width (W) of each groove 40. Further, exhaust ducts 4 may be arranged at predetermined intervals. Exhaust ducts 4 are disposed at positions facing depression 20y that is provided in side surface 20X of battery holder 20 housed inside inner case 3. Since exhaust ducts 4 are thus disposed to face depressions 20y of battery holder 20, exhaust ducts 4 may be provided in side wall 33X without an enlargement in an external shape of inner case 3. Further, since the exhaust ducts are disposed in a well-balanced manner, the gas filling inner case 3 may be exhausted to the outside smoothly and efficiently.

A drawing process is applied to first plate 35 made of a metal plate to form groove 40. First plate 35 shown in FIG. 2 is subjected to drawing process to have a predetermined depth relative to a surface of first plate 35 facing second plate 36, and provides groove 40 in the surface. Depth (d) of groove 40 may range, e.g., from 3 mm to 10 mm. Groove 40 shown in FIGS. 7 and 8 extends in a vertical direction of first plate 35, and has predetermined lateral width (W) and vertical width (L). Vertical width (L), lateral width (W), and depth (d) of groove 40 which forms exhaust duct 4 are adjusted to adjust the volume of exhaust duct 4. In the present embodiment, the horizontal direction is perpendicular to the vertical direction.

The vertical width (L) of groove 40 which forms exhaust duct 4 is 60% or more and 90% or less of height (Z) of outer peripheral wall 33. The vertical width (L) may range, e.g., from 10 cm to 25 cm. The lateral width (W) of depression 40 has such a magnitude that depression 40 may be disposed in depression 20y that is formed in side surface 20X of battery holder 20 accommodated in inner case 3. The lateral width (W) may be, e.g., 0.6 times or more and 1.5 times or less an outer diameter of cylindrical secondary battery cell 1. Groove 40 provided in side wall 33X of inner case 3 may face all depressions 20y or a part of depressions 20y of battery holder 20 accommodated in inner case 3. A closing length (s), inner case 3 shown in FIG. 5-8 is adjusted to adjust an opening length (h) of second opening 42. The closing length (s) is a length of a portion of second plate 36 laminated on first plate 35 closes groove 40. Second plate 36 preferably determines closing length (s) so as to close 50% or more and 90% or less of vertical length (L) of groove 40.

In lower case 30A, first plates 35 are connected, in an upright posture, to both sides of lower plate 31 on which battery assembly 10 is mounted. Fixing pieces 38 are connected to both ends of lower plate 31. Fixing piece 38 is used to connect closing plate 27 that forms discharge path 25. Both ends of the first plate are bent inwardly to provide collision plate 26 and bent portion 26A. Collision plate 26 and bent portion 26A are used to form discharge path 25. A tip end part of fixing piece 38 is bent inwardly and horizontally, and provides fixing part 38A that is used to fix battery holder 20 of battery assembly 10. Battery assembly 10 is fixed to fixing part 38A of fixing piece 38 with screw 19 that passes through boss 20a provided in battery holder 20. Furthermore, in lower case 30A shown in FIG. 8, ridges 39 are provided on lower plate 31 to reinforce lower plate 31. Ridge 39 has a projecting shape projecting downward with respect to the main body of planar lower plate 31, and extends in a width direction intersecting with an elongated direction of side wall 33X in a plan view. Ridges 39 are formed at equal intervals in parallel with one another. Lower case 30A mentioned above is formed as follows: a metal plate is cut to have a predetermined shape. Then, drawing process is applied to the metal plate to form groove 40 in first plate 35 and provide ridge 39 on lower plate 31. After that, bending process is applied to form first plate 35, collision plate 26, and fixing piece 38 so as to be in predetermined postures relative to lower plate 31.

In upper case 30B, second plates 36 are connected to both sides of upper plate 32 in an upright posture. End plates 37 are connected to both ends of upper plate 32 in an upright posture. In upper case 30B shown in the figure, ridges 39 are provided on upper plate 32 to reinforce upper plate 32. Ridge 39 has a projection shape projecting upward with respect to the main body of planar upper plate 32, and extends in a width direction intersecting with the elongated direction of side wall 33X in a plan view. Ridges 39 are formed at equal intervals in parallel with one another. Upper case 30B is formed as follows: a metal plate is cut to have a predetermined shape. Then, drawing process is applied to the metal plate to provide ridges 39 on upper plate 32. After that, bending process is applied to form second plate 36 and end plate 37 so as to be in predetermined postures relative to upper plate 32.

As shown in FIG. 2, inner case 3 mentioned above is formed such that second plate 36 of upper case 30B is laminated outside first plate 35 provided in lower case 30A, and then, lower case 30A and upper case 30B are connected to each other. Lower case 30A including first plates 35 on both sides thereof and upper case 30B including second plates 36 on both side thereof are connected to each other, and this structure forms exhaust duct 4 in laminated portion 34 while laminating these simply and easily to configure side wall 33X. First plate 35 and second plate 36 which are laminated to each other are screwed with screw 49 and tightly and securely fixed. Furthermore, in upper case 30B shown in the figure, end plate 37 is connected to one end of upper plate 32 in an upright posture. End plate 37 is disposed outside collision plate 26 which is provided in lower case 30A to reinforce collision plate 26.

In inner case 3, discharge paths 25 are provided inside end walls 33Y of outer peripheral wall 33 which are opposite to each other. Discharge path 25 has a collision structure and is communicated with the inside of inner case 3. Discharge path 25 with a collision structure shown in FIG. 4 includes a pair of collision plates 26 provided on both sides of the end surface of inner case 3, and closing plate 27 disposed on a side of battery assembly 10 of collision plates 26. In the state where closing plate 27 is fixed to fixing piece 38, gap 28 is provided between both side walls 33X and closing plate 27. In the pair of collision plates 26, a tip part of each collision plate 26 on a center side is bent inwardly to form bent portion 26A. Each of both ends of closing plate 27 is bent toward collision plate 26 to form bent piece 27A. In discharge path 25 with this structure, as shown by the arrow of FIG. 4, gas passing through gap 28 provided between bent piece 27A of closing plate 27 and side wall 33X collides with collision plate 26, and a flow direction of the gas is changed. The gas with a flow direction changed by collision plate 26 is directed toward closing plate 27 by bent portion 26A of collision plate 26 and collides with closing plate 27. After that, the gas is discharged to the outside from wiring opening 29 opening in the end surface. In discharge path 25 mentioned above, a lead wire or an output line which is drawn from battery assembly 10 meanders non-linearly and drawn to the outside of the inner case 3. This configuration prevents objects, such as gas, discharged from secondary battery cell 1 from being ejected and changed into a go-straight flame and ejected to the outside from inner case 3.

In power supply device 100 shown in FIGS. 2 and 3, secondary battery cells 1 are accommodated in inner case 3 such that first end surface 1A is arranged to be in an upward posture. A discharge valve is provided in first end surface 1A. Groove 40 formed in first plate 35 of side wall 33X extends in a vertical direction. First opening 41 is provided in an upper end part of side wall 33X, and second opening 42 is provided in a lower part of side wall 33X. If the discharge valve of secondary battery cell 1 is arranged so as to be in an upward posture, the ejected objects are discharged as follows: when problems occur in any of secondary battery cells 1, ejected objects, such as gas, are discharged. In such a situation, the ejected objects are discharged from an upper surface of battery assembly 10 and flow toward side wall 33X from upper space 15 formed between an upper surface of battery assembly 10 and upper plate 32 of inner case 3, as shown by arrow A of FIG. 2. After that, the ejected objects are guided to exhaust duct 4 from first opening 41 which is formed in the upper end part of side wall 33X, and exhausted smoothly. High-temperature and high-pressure gas or foreign matters which are discharged from secondary battery cell 1 when secondary battery cell 1 is in an abnormal state are thus discharged to the outside of inner case 3 smoothly, thereby reducing harmful effect to secondary battery cells 1.

### Outer Case 5

As shown in FIGS. 1-6, outer case 5 has a box shape. The inside of outer case 5 is hollowed, and inner case 3 is accommodated in outer case 5. Inner case 3 accommodates battery assembly 10 therein. As shown in the figure, metal plates are connected to one another to constitute outer case 5. In the examples shown in exploded perspective views of FIGS. 5 and 6, bottom plate 51 and top plate 52 opposite to each other are connected to each other with side plates 53 on both sides of each side plate, and are connected with end plates 54 on both ends of each end plate. The entire external shape of outer case 5 thus has a rectangular parallelepiped box shape.

Outer case 5 shown in FIGS. 5 and 6 includes first case 50A and second case 50B. First case 50A includes top plate 52 and side plates 53 connected perpendicularly to both sides of top plate 52. Second case 50B includes bottom plate 51 and end plates 54 connected perpendicularly to both ends of bottom plate 51. Second case 50B shown in the figure further includes fixing pieces 55 provided on both sides of bottom plate 51 and along the periphery of end plate 54. Fixing pieces 55 are used for screwing and connecting first case 50A. In this outer case, an outer peripheral portion of first case 50A is screwed to fixing piece 55 of second case 50B with screws 69 in the state where first case 50A overlaps second case 50B, and first case 50A and second case 50B are connected to each other. In the state where first case 50A and second case 50B are connected to each other, a storage space is formed ins outer case 5 to accommodate inner case 3 therein.

Outer case 5 shown in FIGS. 5 and 6 further includes ridges 58 provided on bottom plate 51. Ridge 58 on bottom plate 51 has a projection shape projecting upward with respect to a main body of planar bottom plate 51. Ridge 58 is elongated in a lateral direction of outer case 5. Ridges 58 are provided in parallel with one another. Especially, ridges 58 projecting upward from bottom plate 51 alternately face ridges 39 that are provided in lower plate 31 of inner case 3 and projecting downward. This structure allows ridge 58 projecting upward from bottom plate 51 of outer case 5 to be arranged in a depression formed between ridges 39 projecting downward from lower plate 31 of inner case 3. This configuration prevents an outer shape of outer case 5 from enlarging while reinforcing outer case 5.

In outer case 5 shown in FIGS. 5 and 6, ridges 59 are provided on top plate 52. Ridge 59 on top plate 52 has a projection shape projecting downward with respect to a main body of planar top plate 52. Ridges 59 are elongated in the lateral direction of outer case 5. Ridges 59 are provided in parallel with one another. Especially, ridges 59 projecting downward from top plate 52 alternately oppose to ridges 39 provided in upper plate 32 of inner case 3 and projected upward. Ridge 59 projecting downward from top plate 52 of outer case 5 are disposed in a depression formed between ridges 39 projecting upward from upper plate 32 of inner case 3. This configuration prevents the outer shape of outer case 5 from enlarging while reinforcing outer case 5.

### Check Valve 7

Outer case 5 further includes check valve 7. In the state where high-temperature and high-pressure gas or foreign matters are discharged from secondary battery cell 1, check valve 7 is configured to discharge, to the outside, ejected objects, such as gas charged within outer case 5 and foreign matters. In power supply device 100 shown in FIG. 1 and FIGS. 4-6, each of check valves 7 is provided in a corresponding one of opposing side plates 53 of outer case 5. Check valves 7 are provided at a point-symmetrical position in outer case 5 in a plan view. Check valve 7 mentioned above is configured to open while an internal pressure of outer case 5 is high and close when the internal pressure decreases.

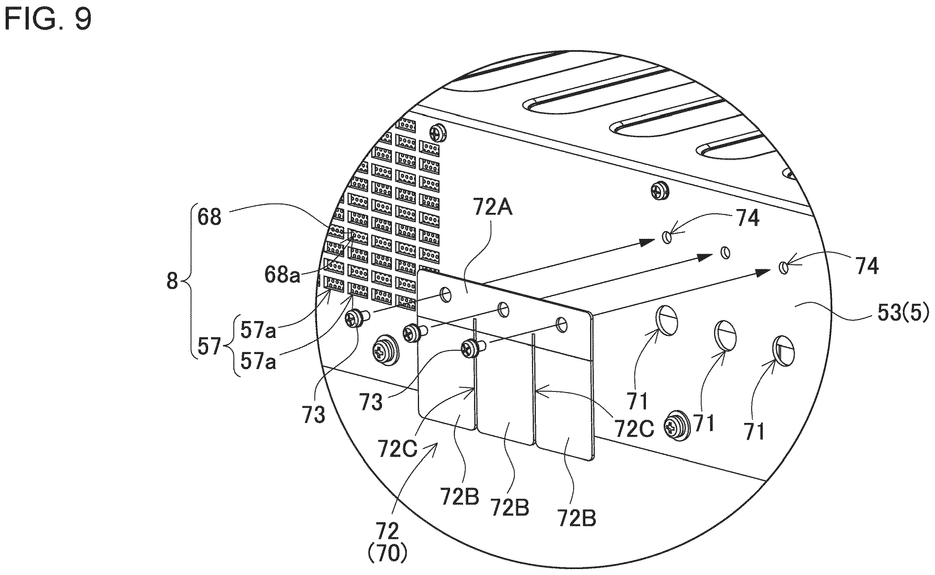

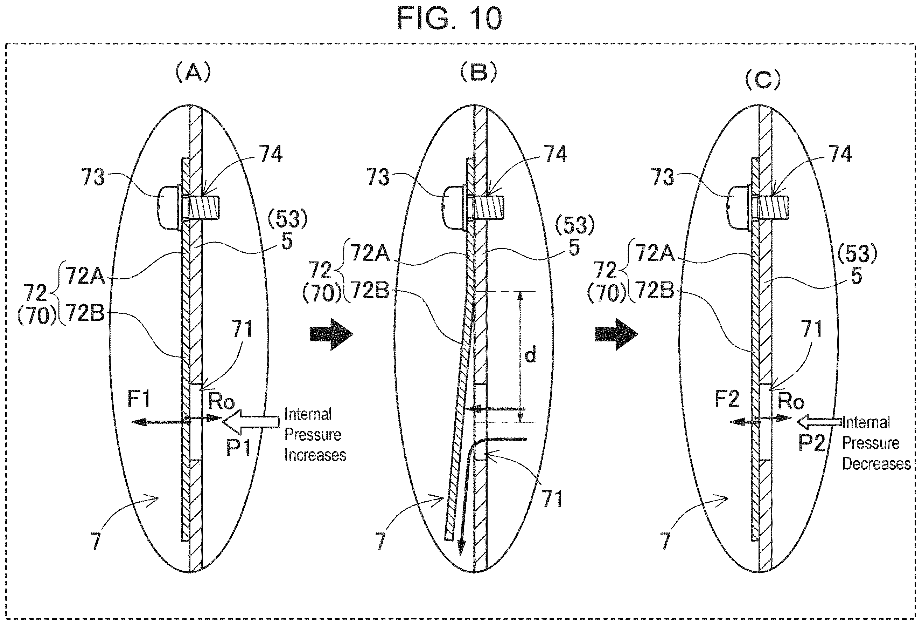

Check valve 7 shown in FIGS. 9 and 10 includes discharge window 71 opening in a part of outer case 5 and closing mechanism 70 which is openable and closeable and is configured to close discharge window 71 mentioned above. When an internal pressure of outer case 5 rises, closing mechanism 70 causes discharge window 71 to open, and causes ejected objects, such as gas charged inside and foreign matters, to pass through opening discharge window 71, so that the ejected objects are discharged to the outside of outer case 5. When ejected objects, such as gas and foreign matters, are discharged from the inside, the internal pressure of outer case 5 decreases. At this moment, closing mechanism 70 closes discharge window 71, thereby preventing the air from entering from the outside.

Closing mechanism 70 shown in FIGS. 9 and 10 includes plate spring 72. A part of plate spring 72 is fixed near discharge window 71 to close discharge window 71. Thus, closing mechanism 70, plate spring 72, is openable and closeable to be configured to close discharge window 71. Plate spring 72 shown in the figure includes fixing part 72A fixed to outer case 5 and closing part 72B elongated from fixing part 72A mentioned above. Closing part 72B is configured to elastically close discharge window 71. Fixing screw 73 passing through fixing part 72A is screwed into fixing hole 74 formed in outer case 5. Fixing part 72A of plate spring 72 is thus fixed to a fixed position of outer case 5. In check valve 7 shown in the figure, discharge window 71 opening in outer case 5 has a circular shape, and closing part 72B has a rectangular shape that can close discharge window 71 with the circular shape. This structure allows closing part 72B with the rectangular shape to surely close discharge window 71 with the circular shape. However, the shape of discharge window 71 or the shape of closing part 72B is not limited to this, but may be various shapes.

As shown in FIG. 10, in closing mechanism 70 which is plate spring 72, when ejected objects from secondary battery cell 1 increase an internal pressure (P1) of outer case 5 (see FIG. 10(A)) while closing part 72B closes discharge window 71, an outward force (F1) increases. The outward force (F1) is received by closing part 72B from the gas inside outer case 5 in discharge window 71. When outward force (F1) becomes larger than an elastic pressing force (Ro) acting on closing part 72B plate spring 72, plate spring 72 deforms to remove closing part 72B away from discharge window 71, and discharge window 71 opens (see FIG. 10(B)). In such a situation, discharge window 71 opens, and ejected objects from the inside of outer case 5, such as gas and foreign matters, pass through discharge window 71 and are discharged to the outside of outer case 5. When gas and foreign matters are discharged from the inside of outer case 5, internal pressure (P2) of outer case 5 decreases. As a result, the outward force (F2) which closing part 72B receives from the gas inside in discharge window 71 is decreased. When the outward force (F2) becomes smaller than elastic pressing force (Ro) acting on closing part 72B of plate spring 72, plate spring 72 returns to have the original shape. Then, closing part 72B closes discharge window 71 (see FIG. 10(C)), and prevents the air from entering from the outside.

The outward force (F) received by closing part 72B from the air inside outer case 5 is a product of the inner pressure (P) of outer case 5 and an opening area (S) of discharge window 71. Therefore, in check valve 7, the opening area (S) of discharge window 71 and elastic pressing force (Ro) of plate spring 72 are determined so as to allow a valve-opening pressure (Ps) to have a predetermined value. Valve-opening pressure (Ps) is a pressure opening check valve 7 when the internal pressure of outer case 5 increases. The elastic pressing force (Ro) of plate spring 72 is specified by a material and a shape (thickness, width, length, or the like) of plate spring 72, and distance (d) from discharge window 71 to fixing part 72A. Therefore, the elastic pressing force (Ro) of plate spring 72 may be adjusted by distance (d) from discharge window 71 to fixing part 72A in the case that a material and a shape (thickness, width, length, or the like) of plate spring 72 is specified. For instance, in check valve 7 mentioned above, if the opening area (S) of discharge window 71 is large or the distance (d) from discharge window 71 to fixing part 72A is large, the valve-opening pressure (Ps) is small. If the opening area (S) of discharge window 71 is reduced or distance (d) from discharge window 71 to fixing part 72A is shortened, the valve-opening pressure (Ps) is large. In check valve 7 with this structure, in order to allow the valve-opening pressure (Ps) to be a predetermined pressure, the opening area (S) of discharge window 71 and the distance (d) from discharge window 71 to fixing part 72A may be changed and adjusted. Therefore, the valve-opening pressure (Ps) may advantageously be adjusted simply.

Check valve 7 shown in FIG. 9 includes three discharge windows 71 opening and arranged side by side. Plate spring 72 serving as closing mechanism 70 includes three closing parts 72B each of which faces a corresponding one of discharge windows 71 with fixing part 72A fixed to outer case 5. In plate spring 72 mentioned above, closing parts 72B each of which closes a corresponding one of three discharge windows 71 extend from fixing part 72A. Closing parts 72B each of which closes a corresponding one of discharge windows 71 elastically in the state where fixing part 72A is fixed to outer case 5. In plate spring 72 shown in the figure, closing parts 72B extending from fixing part 72A are separated through slit-like cut lines 72C from one another. Three closing parts 72B having strip shapes are connected to fixing part 72A. In plate spring 72 with this structure, each of closing parts 72B faces a corresponding one of discharge windows 71 and close it in the state where fixing part 72A is fixed to outer case 5. Discharge windows 71 including discharge window 71 open in a part of the face of outer case 5. Plate spring 72 includes closing parts 72B that include closing part 72B configure to move individually relative to fixing part 72A. Each of closing parts 72B is configured to close a corresponding one of discharge windows 71.

In the state where gas, foreign matters, and the like are discharged from secondary battery cell 1, check valve 7 with this structure opens discharge windows 71 in response to an increase in internal pressure of outer case 5. If check valves 7 open according to an amount of gas or foreign matters discharged from the plurality of secondary battery cells 1, a discharge amount of ejected objects, such as gas and foreign matters, may be increased advantageously. Check valve 7 may include one discharge window 71. If the opening area (S) of discharge window 71 is large, a large amount of gas may be discharged when check valve 7 opens. However, in this case, since the opening area (S) is large, the outward force (F) acting on the closing part, which is specified by a product of the valve-opening pressure (Ps) and the opening area (S), is increased. This causes the elastic force of the plate spring that closes the discharge window to be hardly adjusted. On the other hand, including plural discharge windows 71 opening, check valve 7 may adjust the entire discharge amount while reducing the opening area (S) of each discharge window 71. As a result, the outward power (F) specified by the product of the internal pressure (P) and the opening area (S) may be reduced. In this configuration, the elastic pressing force (Ro) by plate spring 72 configured to openably close discharge window 71 is simply adjusted. Therefore, by adjusting the number of opening discharge windows 71 and the opening areas (S) of discharge windows 71, check valve 7 adjusts a discharge amount of gas discharged from the inside of outer case 5. Plural discharge windows 71 reduce the elastic pressing force (Ro). This configuration allows opening and closing of check valve 7 to be securely controlled while plate spring 72 is inexpensive to reduce a manufacturing cost.

In check valve 7 mentioned above, plural discharge windows 71 which open in parallel are closed with a sheet of plate spring 72 including closing parts 72B divided from one another. However, plate spring 72 is not limited to this configuration, but may be provided for each of discharge windows 71. For instance, three plate springs may be disposed for three discharge windows. In this case, the discharge windows are not necessarily arranged in parallel, e.g., check valves 7 each including one discharge window 71 and one plate spring 72 may be disposed separately in an outer peripheral wall. If an internal pressure concentrates at an area inside outer case 5 and especially increases at the area, this structure open check valve 7 provided at a portion corresponding to the area at which the internal pressure increases, thereby exhausting inner gas effectively.

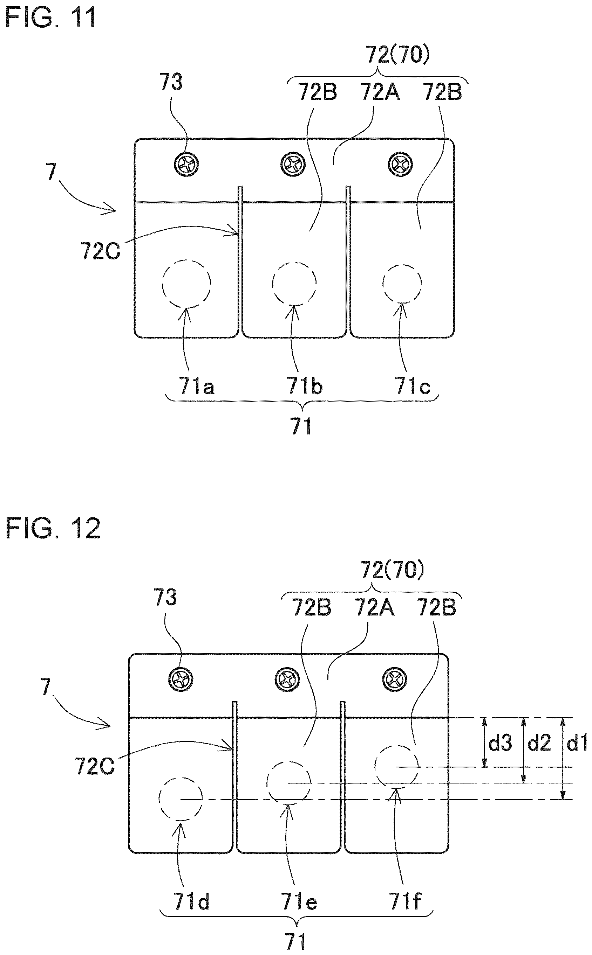

In check valve 7 including discharge windows 71, valve-opening pressures (Ps) at which discharge windows 71 open may be different from one another, as shown in FIGS. 11 and 12. In check valve 7 shown in FIG. 11, the opening areas (S) of discharge windows 71 opening in outer case 5 are different from one another. In check valve 7 shown in the figure, the opening area (S) of discharge window 71a located on the leftmost side in the figure is maximized, and the opening areas (S) of discharge window 71b and discharge window 71c decrease in this order from the left to the right. In check valve 7 mentioned above, the valve-opening pressure (Ps) of discharge window 71a which has the largest opening area (S) is minimized and the valve-opening pressures (Ps) of discharge window 71b and discharge window 71c increase in this order from the left. In check valve 7 with this structure, discharge windows 71 open sequentially according to an increase in internal pressure of outer case 5, thereby controlling the discharge state by using check valves 7 ideally.

In check valve 7 shown in FIG. 12, the opening areas (S) of discharge windows 71 opening in outer case 5 are identical to one another, but positions of discharge windows 71 opening in outer case 5 are different from one another. In check valve 7 shown in the figure, the distance (d1) between fixing part 72A and discharge window 71d which is located on the leftmost side in the figure is larger than a distance between the fixing part and any other discharge window, thereby minimizing the valve-opening pressure (Ps) at which check valve 7 opens. The distance (d2) between discharge window 71e and fixing part 72A and the distance (d3) between discharge window 71f and fixing part 72A decrease in this order, thereby increasing the valve-opening pressures (Ps) sequentially. In check valve 7 with this structure, discharge windows 71 open sequentially according to an increase of the internal pressure of outer case 5, thereby controlling the discharge state by using check valve 7 ideally.

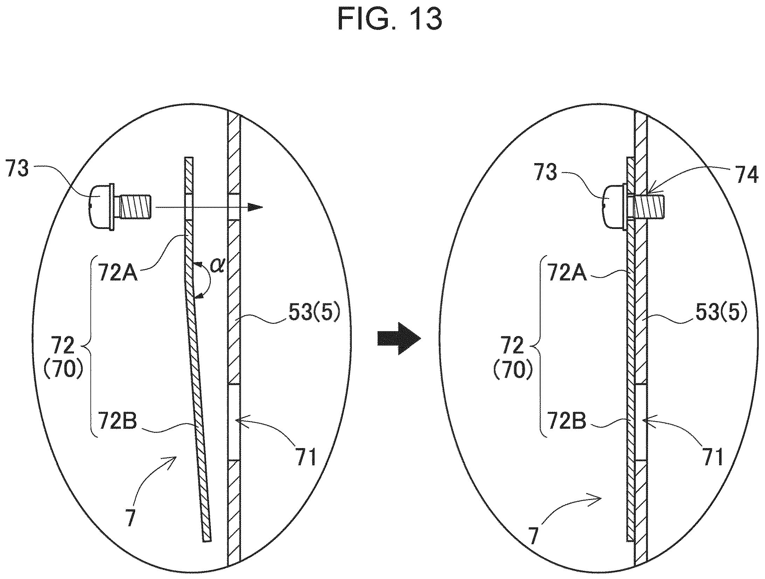

In the state where fixing part 72A of plate spring 72 is fixed to outer case 5, closing mechanism 70 which is plate spring 72 is preferably held in the state where closing part 72B is urged and to elastically close discharge window 71. To achieve this situation, closing mechanism 70 which is plate spring 72 allows closing part 72B to deform to have a predetermined angle (α) relative to fixing part 72A as shown in FIG. 13 prior to fixing fixing part 72A to outer case 5. Thus, even when plate spring 72 is disposed on a surface of outer case 5 and has a planar shape, plate spring 72 is held in the state where closing part 72B is urged to close discharge window 71 elastically. This structure allows check valve 7 which is in a closed state to be held in the state where closing part 72B closes discharge window 71. However, plate spring 72 does not necessarily deform closing part 72B to have a predetermined angle (α) relative to fixing part 72A in advance. While using a plate spring including the closing part and the fixing part arranged on the same plane, the above-mentioned structure has an outer case in which a surface to which the fixing part is fixed is angled at a predetermined angle (e.g., above-mentioned angle (α)) with respect to an opening surface of a discharge window to be closed by the closing part. In this structure, in the state where being fixed to the outer case, the plate spring with a planer shape deforms to form a predetermined angle (α), and the discharge window is held while being closed.

As mentioned above, plate spring 72 constituting closing mechanism 70 is manufactured by using iron-based spring material (spring steel), stainless-steel-based spring material, or copper-based spring material. Plate spring 72 which depends on its form has a thickness ranging from 0.5 mm to 1.0 mm. Closing part 72B is elastically urged toward discharge window 71.

In check valve 7 mentioned above, a through-hole is formed directly in side plate 53 of outer case 5, and the through-hole is used as discharge window 71. However, discharge window 71 is not limited to such a structure, i.e., a metal plate constituting outer case 5 directly opens. For instance, another member may be provided on outer case 5 and a through-hole is formed to open in the another member to form discharge window 71. In consideration of weight or cost, a light and thin metal plate is used for the metal plate that constitutes the outer case, for example. In this case, if a through-hole is formed to directly open in the outer case as the discharge window, the strength may deteriorate near an opening of the discharge window. In such a case, another metal plate may be laminated and fixed on a part of the outer case as a reinforcement member, and a through-hole is formed to open in the metal plate mentioned above to form discharge window 71. In the present description, the way to provide a discharge window in a part of the outer case is construed widely, and includes the manner in which a discharge window is formed to open in another member fixed to the outer case.

### Another Example of Check Valve

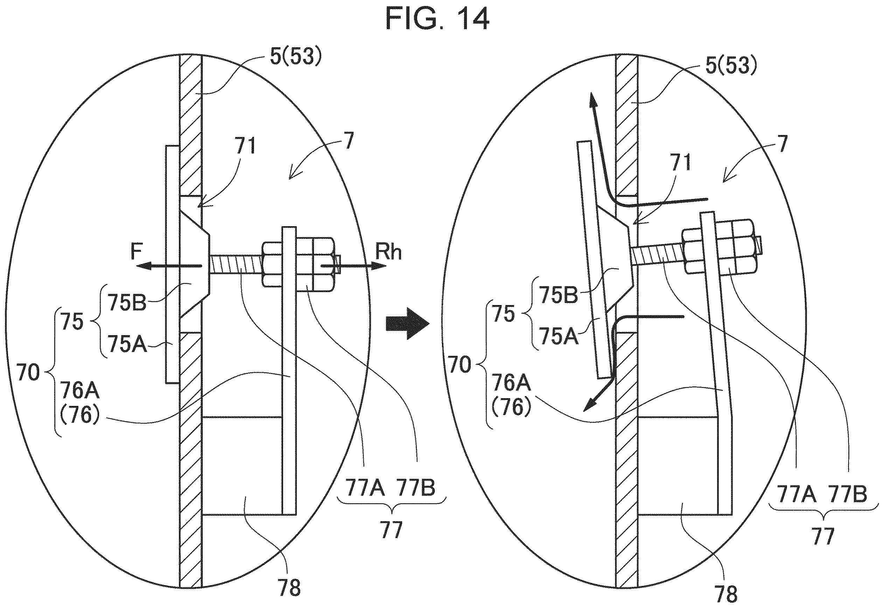

The above-mentioned check valve includes a plate spring as the closing mechanism, but the check valve may have another structure as the closing mechanism for openably and closeably closing the discharge window, which is formed to open in a part of the outer case. In check valve 7 shown in FIGS. 14-16, closing mechanism 70 includes valve body 75 configured to openably and closeably close discharge window 71 and elastic body 76 elastically urging valve body 75 toward discharge window 71.

In check valve 7 shown in FIG. 14, valve body 75 is configured to close discharge window 71 opening in outer case 5. Valve body 75 includes lid 75A having an outer shape configured to close discharge window 71 and insert part 75B provided on the center of lid 75A and configured to be inserted in discharge window 71. Valve body 75 made of metal is connected to elastic body 76 with connection member 77 connected with the center of insert part 75B. Elastic body 76 which is plate spring 76A is arranged in parallel with side plate 53 in outer case 5. One end of elastic body 76 which is plate spring 76A is connected to valve body 75 with connection member 77, and the other end thereof is fixed to the inside of outer case 5 with pedestal 78. In connection member 77 shown in the figure, a thread part serving as a tip end of bolt 77A which passes through valve body 75 is connected to plate spring 76A through nut 77B. A metal rod and a metal wire may be used for connection member 77 mentioned above.

As shown in FIG. 14, in the state where valve body 75 closes discharge window 71, if ejected objects from secondary battery cell 1 increase an internal pressure of outer case 5, outward force (F) which valve body 75 receives from the gas inside becomes larger than elastic tensile force (Rh) of plate spring 76A acting on valve body 75. At this moment, in closing mechanism 70 mentioned above, plate spring 76A deforms and valve body 75 is removed away from discharge window 71, thereby opening discharge window 71. In such a situation, ejected objects, such as gas and foreign matters, pass through opening discharge window 71, and are discharged from the inside of outer case 5 to the outside of outer case 5. When gas and foreign matters are discharged from the inside of outer case 5 and the internal pressure of outer case 5 decreases, plate spring 76A returns to its original shape, and discharge window 71 is closed by valve body 75, thereby preventing the air from entering from the outside.

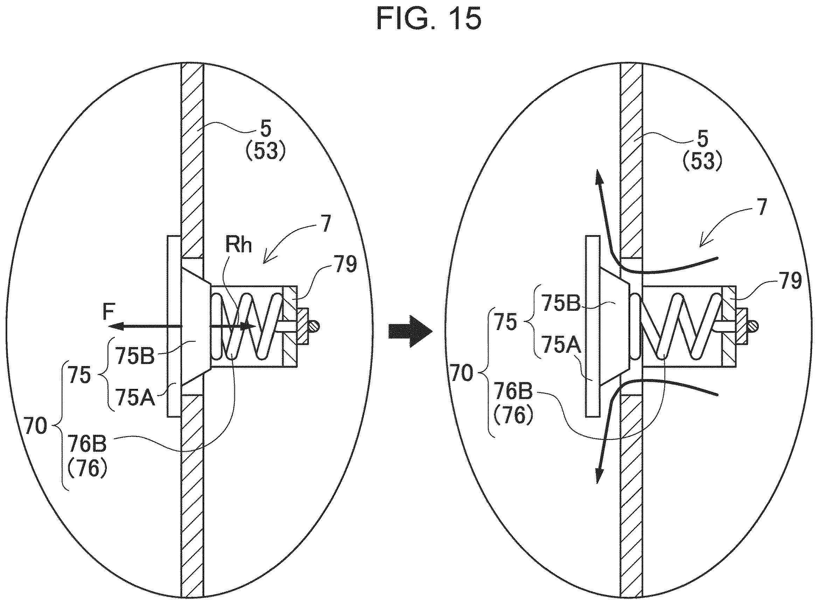

In check valve 7 shown in FIG. 15, although valve body 75 configured to close discharge window 71 opening in outer case 5 includes lid 75A having an outer shape capable of closing discharge window 71 and insert part 75B provided at the center of lid 75A and configured to be inserted in discharge window 71. Elastic body 76 configured to urge valve body 75 toward discharge window 71 is constituted by coil spring 76B. Coil spring 76B shown in the figure, which is an extension spring, is disposed inside outer case 5. One end of coil spring 76B, which is an extension spring, is connected to the center of valve body 75, and the other end thereof is fixed to the inside of outer case 5 with supporting member 79.

As shown in FIG. 15, in the state where valve body 75 closes discharge window 71, if ejected objects from secondary battery cell 1 increase an internal pressure of outer case 5, an outward power (F) received by valve body 75 from the gas inside becomes larger than the elastic tensile force (Rh) of coil spring 76B, which is an extension spring acting on valve body 75. At this moment, in closing mechanism 70 mentioned above, coil spring 76B is expanded and valve body 75 is removed away from discharge window 71, thereby opening discharge window 71. In such a situation, ejected objects, such as gas and foreign matters, pass through opening discharge window 71, and are discharged from the inside of outer case 5 to the outside of outer case 5. When gas and foreign matters are discharged from the inside of outer case 5 and the internal pressure of outer case 5 decreases, coil spring 76B returns to have its original shape, and discharge window 71 is closed by valve body 75, thereby preventing the air from entering from the outside.

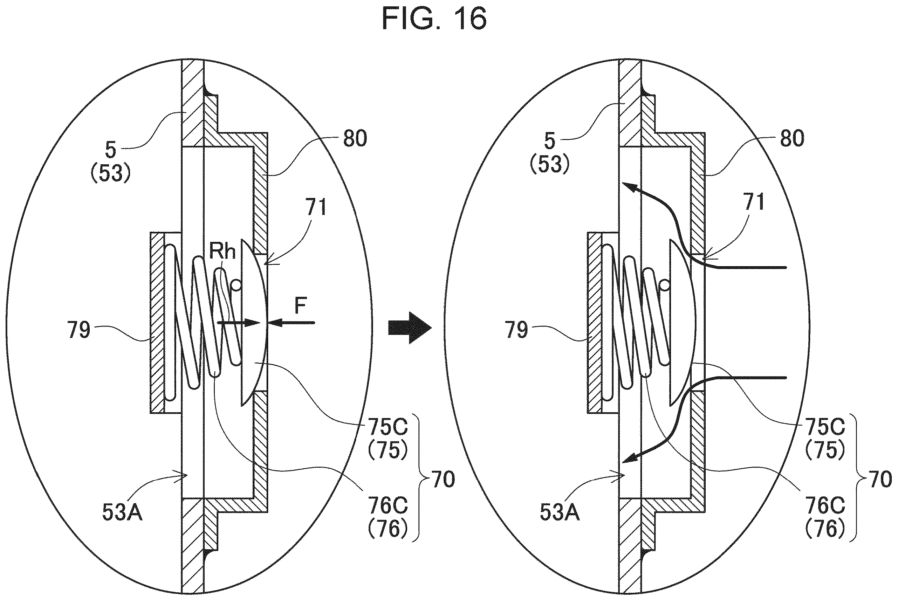

Check valve 7 shown in FIG. 16 includes cap 80 made of metal and configured to close opening 53A opening in outer case 5. Cap 80 is fixed to an inner surface of outer case 5, and discharge window 71 opens in a center part of cap 80 mentioned above. Valve body 75 is configured to close discharge window 71 opening in cap 80. Valve body 75 includes lid 75C with a spherical shape capable of closing discharge window 71 and coil spring 76C serving as elastic body 76 urging lid 75C toward discharge window 71. Coil spring 76C shown in the figure, which is a compression spring, is disposed outside outer case 5. One end of coil spring 76C, which is a compression spring, is connected to the center of valve body 75, and the other end thereof is fixed to the inside of outer case 5 with supporting member 79. The coil spring has a truncated cone shape with a coil diameter decreasing gradually in an axial direction, and urges the valve body toward the discharge window precisely. However, the coil spring may have another structure, i.e., a compression spring with a coil diameter constant in an axial direction.

As shown in FIG. 16, in the state where valve body 75 closes discharge window 71, if ejected objects from secondary battery cell 1 increase an internal pressure of outer case 5, the outward force (F) received by valve body 75 from the gas inside becomes larger than the elastic pressing force (Ro) of coil spring 76C, which is a compression spring acting on valve body 75. At this moment, in closing mechanism 70 mentioned above, coil spring 76C is contracted and valve body 75 is removed away from discharge window 71, thereby opening discharge window 71. In such a situation, ejected objects, such as gas and foreign matters, pass through opening discharge window 71, and are discharged from the inside of outer case 5 to the outside of outer case 5. When gas and foreign matters are discharged from the inside of outer case 5 and the internal pressure of outer case 5 decreases, coil spring 76C returns to have its original shape, and presses valve body 75 toward discharge window 71 to close discharge window 71, thereby preventing the air from entering from the outside.

### Exhaust Port 8

Outer case 5 discharges ejected objects, such as gas, which are discharged from secondary battery cell 1 accommodated in inner case 3 and emitted to the outside of inner case 3, to the outside of outer case 5 without changing the ejected objects into a flame. To achieve this, exhaust port 8 through which the gas passes is provided in a part of an external surface of outer case 5. Exhaust port 8 shown in the figure includes opening port 57 opening in outer case 5 and perforated plate 68 disposed in opening port 57. In outer case 5 shown in the figure, a large number of holes 57a are provided in side plate 53 in a lattice pattern to form opening port 57, and perforated plate 68 is disposed inside opening port 57. In perforated plate 68, a large number of through-holes 68a with a small diameter open therein. Through-hole 68a has an opening area smaller than an opening area of hole 57a, and has an inner diameter of 0.5 mm or more and 3 mm or less. The opening area of hole 57a is 10 times or more and 30 times or less the opening area of through-hole 68a. Five or more and ten or less through-holes 68a are located in one hole 57a. This structure reduces the opening area of through-hole 68a in perforated plate 68 and additionally, reduces an opening area of perforated plate 68 as a whole, thereby achieving a flame arrester function. Thus, an oxygen deficiency condition is established inside outer case 5 to shut down a flame (anti-inflammatory action, and flashback and frame prevention). As perforated plate 68 having such structure, a punching metal may be used, for example. A metal mesh may be used for the perforated plate.

In outer case 5 mentioned above, after passing through through-holes 68a of perforated plate 68 in exhaust port 8, high-temperature and high-pressure gas which is discharged from inner case 3 is emitted to the outside of outer case 5 from holes 57a. This configuration prevents an outer flame effectively, i.e., ejected objects from secondary battery cell 1 from changing into a flame and being ejected to the outside of outer case 5. If a little amount of ejected objects, such as gas and foreign matters, are discharged from secondary battery cell 1 and an internal pressure of outer case 5 is not increased up to a predetermined pressure at which a check valve opens, power supply device 100 allows the ejected objects to pass through perforated plates 68 disposed in opening port 57 of outer case 5 and discharge the ejected objects to the outside, thereby preventing occurrence of harmful effects, such as an outer flame. If a large amount of gas, foreign matters, or the like are discharged from secondary battery cell 1 and increase beyond capability of perforated plate 68, an internal pressure of outer case 5 exceeds a valve-opening pressure, which is a predetermined pressure. In such a situation, check valve 7 operates to open. Thus, the gas and foreign matters within the outer case 5 are discharged from opening discharge window 71 to the outside smoothly. When the gas and foreign matters are discharged to the outside and the internal pressure of outer case 5 decreases to less than the valve-opening pressure, check valve 7 is closed. When check valve 7 is closed, outer case 5 is in a closed state. In that state, perforated plate 68 functions as a flame arrester. Accordingly, depending on the amount of ejected objects, such as gas and foreign matters, discharged from secondary battery cell 1 accommodated inside, and an state inside the outer case, power supply device 100 may discharge the gas inside and foreign matters ideally, while controlling discharge gas and foreign matters to the outside most suitably. The power supply device of the present disclosure may not necessarily include the exhaust port in the outer case. In this power supply device, a check valve provided in outer case is used to discharge ejected objects, such as gas and foreign matters, discharged from secondary battery cell 1.

### Board Room 60, Circuit Board

Power supply device 100 shown in FIGS. 3-6 may include board room 60 at a position located on an end surface side of outer case 5 and faces wiring opening 29 of inner case 3, as shown by a dashed line. Board room 60 may accommodate a circuit board therein. Board room 60 is configured to be separated from an inner space of outer case 5, thereby protecting the circuit board from ejected objects, such as high-temperature and high-pressure gas, discharged from inner case 3. A charge/discharge circuit configured to charge and discharge secondary battery cells 1, a protection circuit configured to monitor voltage and temperature of secondary battery cells 1 to shut down current at the time of abnormalities, or the like may be mounted on the circuit board. A positive/negative output terminal connected to the circuit board or a signal terminal may be disposed in outer case 5 in the state where being exposed from the end plate.

In outer case 5, inner case 3 is fixed to bottom plate 51 of second case 50B, and a lead wire or an output line drawn out from inner case 3 is connected to the circuit board disposed in board room 60. After that, first case 50A is connected to second case 50B. Side plates 53 and upper plate 52 of first case 50A are fixed to fixing piece 55 of second case 50B with screws 69, thereby allowing outer case 5 to have a box shape.

### INDUSTRIAL APPLICABILITY

A power supply device of the present disclosure is suitably used for storage application of a floor mounted type as a power supply of a power storage system for home use, offices, factories, or the like, or a vehicle power supply for hybrid cars, electric vehicles, or the like.

### REFERENCE MARKS IN THE DRAWINGS

- 100: power supply device
- 1: battery cell
- 1A: first end face
- 1a: center electrode
- 1b: end-face electrode
- 3: inner case
- 4: exhaust duct
- 5: outer case
- 7: check valve
- 8: exhaust port
- 10: battery assembly
- 11: battery block
- 13: lead plate
- 13A: first lead plate
- 13B: second lead plate
- 13a: first connection tab
- 13b: second connection tab
- 13x: connection part
- 13y: projecting connection part
- 15: upper space
- 19: set screw
- 20: battery holder
- 20A: first holder
- 20B: second holder
- 20X: side face
- 20x: projection
- 20y: depression
- 20a: boss
- 21: holding part
- 25: discharge path
- 26: collision plate
- 26A: bent portion
- 27: closing plate
- 27A: bent piece
- 28: gap
- 29: wiring opening
- 30A: lower case
- 30B: upper case
- 31: lower plate
- 32: upper plate
- 33: outer peripheral wall
- 33X: side wall
- 33Y: end wall
- 34: laminated portion
- 35: first plate
- 36: second plate
- 37: end plate
- 38: fixing piece
- 38A: fixing part
- 39: ridge
- 40: groove
- 40a: opening
- 41: first opening
- 42: second opening
- 43: cut-off portion
- 44: non-cut-off portion
- 49: set screw
- 50A: first case
- 50B: second case
- 51: bottom plate
- 52: top plate
- 53: side plate
- 53A: opening
- 54: end plate
- 55: fixing piece
- 57: opening port
- 57a: hole
- 58: ridge
- 59: ridge
- 60: board room
- 68: perforated plate
- 68a: through-hole
- 69: fixing screw
- 70: closing mechanism
- 71: discharge window
- 72: plate spring
- 72A: fixing part
- 72B: closing part
- 72C: cut line
- 73: fixing screw
- 74: fixing hole
- 75: valve body
- 75A: lid
- 75B: insert part
- 76: elastic body
- 76A: plate spring
- 76B: coil spring
- 76C: coil spring
- 77: connection member
- 77A: bolt
- 77B: nut
- 78: pedestal
- 79: supporting member
- 80: cap

## Claims

1. A power supply device comprising:
a plurality of secondary battery cells, each of the plurality of secondary battery cells including a discharge valve configured to open when an internal pressure of the each of the plurality of secondary battery cells exceeds a predetermined pressure; and
an outer case accommodating the plurality of secondary battery cells therein, wherein
the outer case includes a check valve configured to open when an internal pressure of the outer case increases and to close when the internal pressure of the outer case decreases, and
the check valve includes:
a discharge window opening in a part of the outer case; and
a closing mechanism which is openable and closable and is configured to close the discharge window.

2. The power supply device according to claim 1, wherein
the closing mechanism includes a plate spring, and
the plate spring includes:
a fixing part fixed to the outer case; and
a closing part extending from the fixing part, the closing part being configured to elastically close the discharge window.

3. The power supply device according to claim 2, wherein the plate spring is held such that the closing part is urged so as to elastically close the discharge window while the fixing part is fixed to the outer case.

4. The power supply device according to claim 2, wherein the discharge window has a circular shape, and the closing part has a rectangular shape.

5. The power supply device according to claim 2, wherein
a plurality of discharge windows including the discharge windows open in a part of a surface of the outer case,
the plate spring includes a plurality of closing parts including the closing part, the plurality of closing parts extending from the fixing part and being moveable independently from one another with respect to the fixing part, and
each of the plurality of closing parts is configured to close a corresponding one of the plurality of discharge windows.

6. The power supply device according to claim 1, wherein
the closing mechanism includes:
a closing part which is openable and closeable and is configured to close the discharge window; and
an elastic body configured to elastically urge the closing part toward the discharge window.

7. The power supply device according to any one of claims 1 to 6, wherein
the outer case includes an exhaust port provided at a part of an outer surface of the outer case being configured to pass gas through, and
the exhaust port includes an opening port opening in the outer case and a perforated plate disposed in the opening port.
